(19) Europäisches Patentamt European Patent Office Office européen des brevets

(11) **EP 1 128 371 B1**

(12) **FASCICULE DE BREVET EUROPEEN**

(45) Date de publication et mention
de la délivrance du brevet:
**22.07.2009 Bulletin 2009/30**

(51) Int Cl.:
**_G11B 7/09_** _(2006.01)_

(21) Numéro de dépôt: **01400389.1**

(22) Date de dépôt: **14.02.2001**

(54) **Procédé et dispositif de contrôle du positionnement d'un faisceau optique incident sur une piste d'un support mobile d'informationS contenues dans ladite piste, en particulier un disque numérique multi-fonctions**

Verfahren und Vorrichtung zur Steuerung der Position eines optischen Strahls auf einer Spur eines beweglichen Datenträgers, inbesondere eine DVD

Method and appartus for controlling the position of an optical beam on a track of a moving information recording medium, in particular a DVD

(84) Etats contractants désignés:
**DE FR GB IT**

(30) Priorité: **23.02.2000 FR 0002263**

(43) Date de publication de la demande:
**29.08.2001 Bulletin 2001/35**

(73) Titulaire: **STMicroelectronics S.A.**
**92120 Montrouge (FR)**

(72) Inventeur: **Graffouliere, Philippe**
**38000 Grenoble (FR)**

(74) Mandataire: **Casalonga, Axel**
**Bureau Casalonga & Josse**
**Bayerstrasse 71/73**
**80335 München (DE)**

(56) Documents cités:
**US-A- 5 956 304**

**Description**

L'invention concerne le contrôle du positionnement d'un faisceau incident sur une piste d'un support, mobile en rotation, d'informations contenues dans ladite piste, et plus particulièrement le contrôle et la détermination de l'erreur de positionnement du faisceau incident par rapport à la piste.

L'invention s'applique avantageusement mais non limitativement à des disques numériques, notamment les disques numériques multifonctions (DVD : "Digital Versatile disc" en langue anglaise) stockant de façon comprimée des données d'image.

Un disque numérique comporte une seule piste en spirale dont le relief est représentatif des informations binaires stockées sur la piste du disque. On éclaire par un faisceau optique incident, par exemple un spot laser, la piste du disque et plusieurs photodétecteurs, par exemple quatre, détectent les réflexions du faisceau lumineux sur le disque. Le capteur optique formé des photodétecteurs délivre alors quatre signaux élémentaires respectivement délivrés par les quatre photodétecteurs, ainsi qu'un signal global, ou signal utile, égal à la somme des quatre signaux élémentaires, signal utile d'où l'on extrait les informations binaires lues sur la piste.

L'asservissement du faisceau optique sur la piste du disque mobile en rotation, s'effectue exclusivement à partir des quatre signaux élémentaires délivrés par les photodétecteurs. Plus précisément, on somme les signaux par paire de façon à former deux signaux que l'on égalise dans un égaliseur analogique avant de les mettre en forme, par comparaison avec un seuil, dans deux comparateurs. Les deux signaux ainsi mis en forme sont mutuellement déphasés si le spot laser ne se situe pas sur la piste. On détecte alors la différence de phase entre ces deux signaux (différence de phase qui est en fait un écart mutuel temporel entre ces deux signaux), écart temporel qui correspond à l'erreur de positionnement du faisceau par rapport à la piste. Cette erreur de positionnement est alors utilisée classiquement dans une boucle d'asservissement pour modifier le système optique incident et ramener et asservir le faisceau optique sur la piste.

Un tel dispositif de l'art antérieur comporte un nombre important de composants analogiques, ce qui est relativement pénalisant d'un point de vue encombrement. Par ailleurs, lorsque la technologie évolue, la modification et la réalisation des nouveaux composants du dispositif nécessitent un temps de conception et de réalisation important.

Par ailleurs, lorsque l'on commande un saut de piste, c'est-à-dire un déplacement brusque du faisceau incident depuis une portion de la piste située à un endroit du disque vers une autre portion de la piste située à un autre endroit du disque, par exemple une portion située plus à l'extérieur ou plus à l'intérieur, on libère l'asservissement. Et, entre le moment de l'instant de commande du saut et le moment où le chariot porteur du système optique démarre réellement, on ne sait plus dans quel sens on franchit les portions de piste, notamment si le disque présente une excentricité.

Pour remédier à ceci, on utilise alors un signal connu par l'homme du métier sous la désignation de "signal miroir" qui est calculé à partir de l'amplitude inférieure du signal utile. Plus précisément, on compare l'enveloppe basse du signal utile à un seuil, ce qui fournit ledit signal miroir. Et, ce signal miroir ainsi obtenu est toujours en quadrature de phase par rapport à un signal binaire représentatif du franchissement d'une portion de piste. La détermination du signe de la différence de phase entre le signal miroir et le signal de franchissement de piste, fournit le sens de franchissement de la piste. Or, il s'avère délicat d'effectuer un grand nombre de traitements sur ces deux signaux, en particulier des filtrages, au risque de perturber la relation de phase. Par ailleurs, il s'avère également délicat de fixer efficacement le seuil de comparaison de l'enveloppe basse du signal utile.

US 5 956 304 décrit un détecteur capable de détecter l'erreur de phase différentiable entre deux signaux diagonaux issus de photodétecteurs, en utilisant le maximum d'une fonction d'intercorrélation.

L'invention vise à apporter une solution à ces problèmes et a notamment pour but d'améliorer la précision dans la détermination de l'erreur de positionnement, tout en s'affranchissant notamment des égaliseurs analogiques.

L'invention permet également de déterminer le sens de franchissement d'une portion de piste sans nécessiter la création d'un signal-miroir.

L'invention propose donc un contrôle du positionnement d'un faisceau optique incident sur une piste d'un support mobile d'informations contenues dans ladite piste, radicalement différent de celui proposé jusqu'alors, et utilisant notamment un fonction d'inter-corrélation entre deux signaux échantillonnés mutuellement déphasés. La recherche du maximum de la fonction d'inter-corrélation fournira, à chaque instant courant, la valeur courante du déphasage entre les deux signaux, c'est-à-dire la valeur courante de l'écart temporel entre ces deux signaux.

Plus précisément, l'invention propose un procédé de contrôle du positionnement d'un faisceau optique incident sur une piste d'un support d'informations contenues dans ladite piste et mobile en rotation, procédé dans lequel on capte le faisceau réfléchi par le disque au moyen d'un capteur optique comportant plusieurs photodétecteurs délivrant respectivement plusieurs signaux élémentaires, et on détermine l'erreur de positionnement du faisceau par rapport à la piste à partir des signaux élémentaires.

Selon une caractéristique générale de l'invention, on élabore à partir des signaux élémentaires, deux signaux échantillonnés, que l'on dénomme ici "signaux secondaires" échantillonnés, dont l'écart temporel mutuel est représentatif de l'erreur de positionnement du faisceau par rapport à la piste. Et, on détermine, à la fréquence d'échantillonnage, les valeurs courantes successives dudit écart temporel mutuel en recherchant, à la fréquence d'échantillonnage, les maxima courants successifs de la fonction d'inter-corrélation entre les deux signaux secondaires échantillonnés; on recherche chaque maximum courant de la fonction d'inter-corrélation à partir d'un jeu d'échantillons de cette fonction d'inter-corrélation correspondant respectivement à un jeu prédéterminé de valeurs d'écarts temporels de référence. En d'autres termes, on limite l'intégration de la fonction d'inter-corrélation à une fenêtre. Et, on détermine la valeur de l'écart temporel correspondant au maximum courant, cette valeur ainsi déterminée fournissant la valeur courante de l'écart temporel mutuel entre les deux signaux secondaires échantillonnés.

Le procédé selon l'invention est un procédé optimum essentiellement arithmétique, qui conduit à des performances améliorées et qui, du reste, est moins sensible au bruit. Par ailleurs, la fonction d'inter-corrélation opère sur la totalité des signaux échantillonnés et non pas sur les seules transitions de ces signaux échantillonnés (une transition étant le franchissement par un seuil prédéterminé, par exemple la valeur zéro, du signal échantillonné), comme cela a déjà été notamment décrit dans la demande de brevet français n° 9903237 au nom de la Demanderesse.

Le procédé selon l'invention s'affranchit donc également du problème de l'estimation des instants temporels de ces transitions.

Chaque écart temporel de référence est avantageusement un multiple entier d'un écart temporel de base, dont la valeur dépend de la bande de fréquences occupée par les deux signaux secondaires échantillonnés. Par ailleurs, l'un des écarts temporels de référence est nul et les autres sont deux à deux égaux et de signe opposé.

La bande de fréquences occupée par les deux signaux secondaires est proportionnelle à la vitesse de rotation de la portion de piste lue. Ainsi, cet écart temporel de base n'est pas le même pour des vitesses de 1x ou de 16x (une vitesse de rotation de 1x correspondant à 4 m/s). D'une façon générale, le choix de la valeur de cet écart temporel de base n'est pas critique pour l'invention, mais une valeur inappropriée peut conduire à des performances dégradées. L'homme du métier saura ajuster la valeur de cet écart temporel de base, ainsi que le nombre d'échantillons de la fonction d'inter-corrélation, de façon à pouvoir couvrir l'ensemble des écarts temporels possibles entre les deux signaux échantionnés et pour pouvoir également obtenir une fonction d'inter-corrélation qui ne soit pas sous ou sur-échantillonnée.

Ainsi, dans un mode de mise en oeuvre préférentiel, le nombre d'écarts temporels de référence est égal à cinq et l'écart temporel de base est choisi avantageusement inférieur à l'inverse de la largeur de la bande de fréquences.

La détermination de la valeur de l'écart temporel correspondant à un maximum courant comporte, dans un mode de mise en oeuvre de l'invention, la sélection, parmi les échantillons de la fonction d'inter-corrélation, de celui ayant la plus grande valeur et des deux échantillons l'encadrant. Cette détermination comporte également une interpolation parabolique entre les trois valeurs sélectionnées et le calcul du rapport entre deux facteurs résultant de cette interpolation parabolique.

Il convient de noter ici que ce mode de mise en oeuvre utilisant l'interpolation parabolique nécessite au minimum trois valeurs de fonction d'inter-corrélation. Ceci étant, dans le cas où seulement trois valeurs de fonction d'inter-corrélation sont utilisées (correspondant à un jeu de trois écarts temporels de référence), il conviendra de choisir une valeur de l'écart temporel de base suffisamment grande pour pouvoir déterminer le maximum de cette fonction d'inter-corrélation. Dans le cas où cinq échantillons sont utilisés, la valeur de l'écart temporel de base pourra être plus petite.

On élabore alors avantageusement à partir des numérateurs des rapports successifs, un premier signal de sortie binaire représentatif du franchissement éventuel de la piste par le signal incident, et on élabore à partir des numérateurs et des dénominateurs des rapports successifs, un deuxième signal de sortie binaire représentatif du sens de franchissement de la piste par le signal incident.

L'invention a également pour objet un dispositif de contrôle du positionnement d'un faisceau optique incident sur une piste d'un support d'informations contenues dans ladite piste et mobile en rotation, ce dispositif comprenant un capteur apte à capter le faisceau réfléchi par le disque et comportant plusieurs photodétecteurs. Le dispositif comporte également des moyens de contrôle aptes à déterminer l'erreur de positionnement du faisceau par rapport à la piste à partir des signaux élémentaires respectivement délivrés par les photodétecteurs.

Selon une caractéristique générale de l'invention, les moyens de contrôle comportent :

- des moyens de prétraitement aptes à élaborer à partir des signaux élémentaires, deux signaux secondaires échantillonnés par un signal d'horloge d'échantillonnage, l'écart temporel mutuel entre les deux signaux secondaires échantillonnés étant représentatif de l'erreur de positionnement du faisceau par rapport à la piste,
- des moyens d'inter-corrélation aptes à effectuer, à la fréquence du signal d'échantillonnage, la fonction d'inter-corrélation entre les deux signaux secondaires échantillonnés, et
- des moyens de traitement aptes à déterminer les valeurs courantes successives dudit écart temporel mutuel en recherchant, à la fréquence d'échantillonnage, les maxima courants successifs de la fonction d'inter-corrélation entre les deux signaux secondaires échantillonnés;

les moyens d'inter-corrélation comportent

- deux entrées pour recevoir respectivement les deux signaux secondaires échantillonnés;
- un jeu de multiplieurs, connectés aux deux entrées par des moyens de retard, et délivrant respectivement un jeu de signaux intermédiaires échantillonnés correspondant respectivement aux produits des signaux secondaires échantillonnés mutuellement décalés temporellement par des écarts temporels de référence;
- un jeu de filtres passe-bas respectivement connectés aux sorties des différents multiplieurs; et
- un moyen de stockage, connecté aux sorties des filtres passe-bas et apte à stocker les jeux successifs d'échantillons de la fonction d'inter-corrélation respectivement associés aux différents écarts temporels de référence;

les moyens de traitement sont alors aptes à rechercher chaque maximum courant de la fonction d'inter-corrélation à partir de chaque jeu d'échantillons stockés dans le moyen de stockage, et à déterminer la valeur de l'écart temporel correspondant à ce maximum courant, cette valeur ainsi déterminée fournissant la valeur courante de l'écart temporel entre les signaux secondaires échantillonnés.

Selon un mode de réalisation de l'invention, les moyens de traitement comportent des moyens de sélection aptes à sélectionner, parmi les échantillons stockés dans les moyens de stockage, celui ayant la plus grande valeur et les deux échantillons l'encadrant. Les moyens de traitement comportent également des moyens d'interpolation aptes à effectuer une interpolation parabolique entre les trois valeurs sélectionnées et à calculer le rapport entre deux facteurs résultant de cette interpolation parabolique, ce rapport fournissant la valeur courante de l'écart temporel mutuel entre les deux signaux secondaires échantillonnés.

Le dispositif selon l'invention comprend également avantageusement des moyens de post-traitement aptes à élaborer à partir des numérateurs des rapports successifs, un premier signal de sortie binaire représentatif du franchissement éventuel de la piste par le signal incident, et à élaborer à partir des numérateurs et des dénominateurs des rapports successifs, un deuxième signal de sortie binaire représentatif du sens de franchissement de la piste par le signal incident.

L'invention a également pour objet un lecteur de disque numérique multifonctions incorporant un dispositif de contrôle tel que défini ci-avant.

D'autres avantages et caractéristiques de l'invention apparaîtront à l'examen de la description détaillée de modes de mise en oeuvre et de réalisation, nullement limitatifs, et des dessins annexés, sur lesquels :

- la figure 1 représente très schématiquement un synoptique d'un dispositif de contrôle selon l'invention, incorporé dans un lecteur de disque DVD;
- la figure 2 illustre, plus en détail mais toujours schématiquement, l'architecture interne des moyens d'inter-corrélation du dispositif de la figure 1;
- la figure 2a représente une fonction d'inter-corrélation échantillonnée réalisée par les moyens de la figure 2;
- la figure 3 illustre plus en détail mais toujours schématiquement, l'architecture interne des moyens de traitement des dispositifs de la figure 1;
- la figure 4 représente un organigramme illustrant la sélection opérée par les moyens de sélection incorporés dans les moyens de traitement du dispositif selon l'invention;
- la figure 5 illustre plus en détail l'architecture interne de moyens de post-traitement du dispositif selon l'invention; et
- la figure 5a représente les signaux d'entrée traités par ces moyens de post-traitement ainsi que l'un des signaux de sortie délivré par ces moyens de post-traitement.

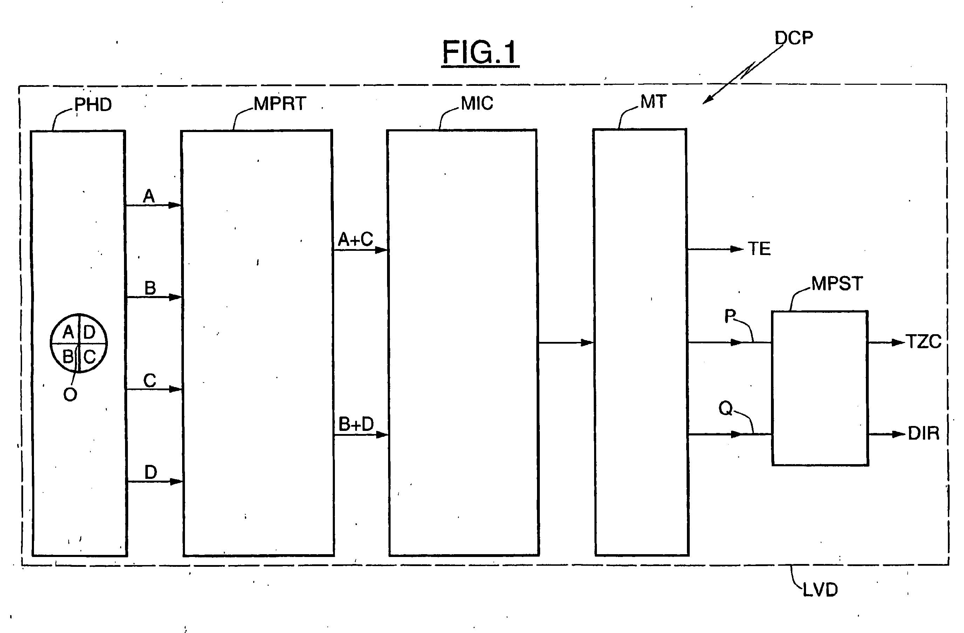

Sur la figure 1, la référence DCP désigne plus particulièrement un dispositif de contrôle de positionnement selon l'invention, comportant en-tête un capteur PHD composé de quatre photodétecteurs A,B,C,D. En pratique, une diode laser émet un faisceau laser qui est dirigé vers la face du disque sur laquelle est gravée la piste contenant les informations, par l'intermédiaire notamment d'une lame séparatrice et d'un système optique classique. Le faisceau réfléchi par le disque en rotation traverse alors dans l'autre sens la lame séparatrice et est capté par les quatre photodétecteurs A,B,C,D qui se situent tous les quatre dans un plan parallèle au plan du disque. Chaque photodétecteur délivre un signal que l'on a référencé, à des fins de simplification, par la même lettre que celle affectée aux photodétecteurs. Ces signaux élémentaires A,B,C,D sont ensuite traités dans des moyens de pré-traitement MPRT, comportant essentiellement des sommateurs et des convertisseurs analogiques numériques.

Plus précisément, on somme les deux signaux élémentaires délivrés par les deux photodétecteurs symétriques par rapport au centre O des capteurs. Ainsi, l'un des signaux secondaires est égal à la somme des signaux élémentaires A et C, tandis que l'autre signal secondaire est égal à la somme des signaux élémentaires B et D. Les deux signaux secondaires A+C et B+D sont ensuite respectivement échantillonnés dans deux convertisseurs analogiques-numériques. Bien entendu, il aurait été possible de convertir sous forme numérique chacun des signaux élémentaires puis de les sommer.

Sur la figure 1, les références A+C et B+D désignent ainsi deux signaux secondaires, échantillonnés après passage dans deux convertisseurs analogique-numérique commandés par un signal d'horloge d'échantillonnage dont la fréquence d'échantillonnage Fe est par exemple égale à 120 MHz correspondant à une période d'échantillonnage de l'ordre de 8,33 ns.

Ces deux signaux secondaires échantillonnés A+C et B+D sont représentatifs de l'erreur de positionnement TE du faisceau par rapport à la piste.

Dans l'exemple qui va être décrit, la valeur de chaque échantillon d'un signal secondaire est un entier signé représenté sur 7 bits.

Ces deux signaux secondaires échantillonnés sont ensuite traités dans des moyens d'inter-corrélation MIC, qui vont effectuer à la fréquence d'échantillonnage, la fonction d'inter-corrélation entre les deux signaux secondaires échantillonnés.

Puis, des moyens de traitement MT vont déterminer les valeurs courantes ou successives dudit écart temporel mutuel TE en recherchant, à la fréquence d'échantillonnage, les maxima courants successifs de la fonction d'inter-corrélation entre les deux signaux secondaires échantillonnés.

On verra plus en détail ci-après que la recherche de ces maxima comporte une interpolation parabolique entre trois échantillons de la fonction d'inter-corrélation, cette interpolation parabolique conduisant à l'élaboration de deux signaux P et Q (dont le rapport va fournir l'écart TE). Ces deux signaux échantillonnés P et Q sont traités dans des moyens de post-traitement MPST qui vont délivrer alors un premier signal de sortie TZC représentatif du franchissement d'une portion de piste par le faisceau incident, ainsi qu'un deuxième signal de sortie DIR représentatif du sens de franchissement.

L'ensemble des moyens du dispositif DCP selon l'invention est avantageusement incorporé dans un lecteur LDVD de disque numérique multifonctions.

La fonction d'inter-corrélation $\Gamma(\tau)$ entre deux signaux x et y est donnée par la formule (I).

$$\Gamma(\tau) = \int_{-\infty}^{+\infty} x(t)\, y(t-\tau)\, dt \qquad\qquad (I)$$

Si, par exemple, le signal y est un signal retardé par rapport au signal x, c'est-à-dire si le signal y est une copie retardée temporellement du signal x, la fonction d'inter-corrélation $\Gamma$ présente un maximum pour la valeur de $\tau$ égale à la valeur de l'écart temporel (retard) entre les signaux x et y.

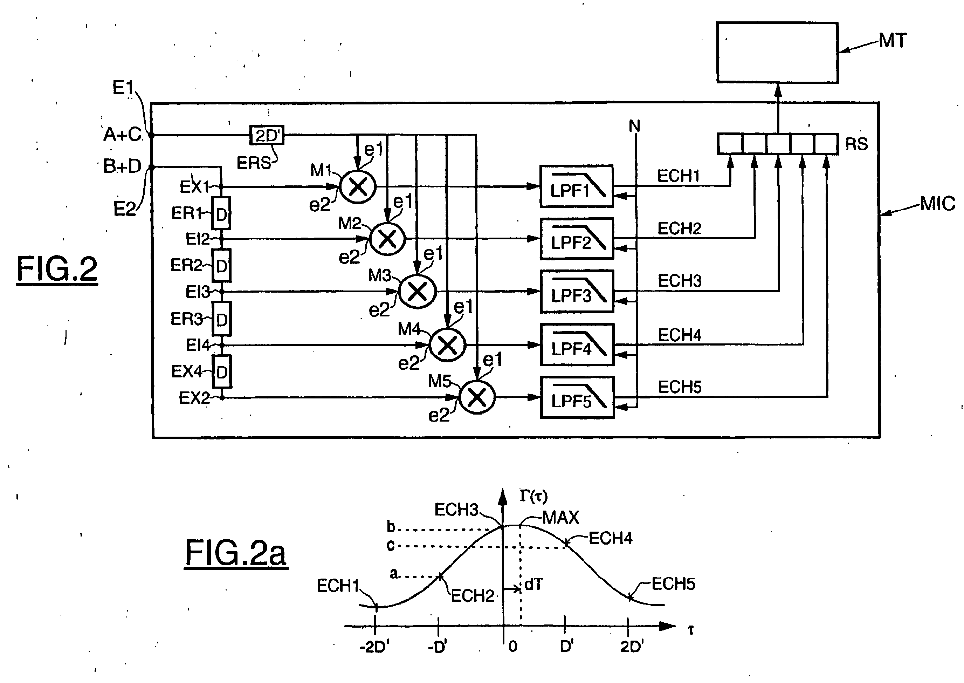

Dans le cas d'une application au disque DVD, le retard (écart temporel mutuel) entre les signaux échantillonnés A+C d'une part, et B+D d'autre part, est variable. Les moyens d'inter-corrélation MIC vont alors estimer, à la fréquence d'échantillonnage, c'est-à-dire pour chaque paire d'échantillons des signaux A+C et B+D présents en entrée des moyens d'inter-corrélation MIC, la fonction d'inter-corrélation $\Gamma(\tau)$ pour un jeu prédéterminé d'écart temporel de référence -2D', -D', 0, D' et 2D'. Ces moyens d'inter-corrélation MIC vont donc ainsi, pour chaque paire d'échantillons des signaux A+C et B+D, déterminer cinq échantillons ECH1, ECH2, ECH3, ECH4 et ECH5 de la fonction d'inter-corrélation, correspondant respectivement aux cinq écarts temporels de référence -2D', -D', 0, D', 2D' (figure 2a).

Les moyens de traitement MT vont ensuite, pour chaque jeu d'échantillons ECH1-ECH5, déterminer le maximum de cette fonction d'inter-corrélation en effectuant comme on le verra plus en détail ci-après une interpolation parabolique, la valeur de l'écart temporel dT de ce maximum courant MAX (compté sur la figure 2a à partir de l'écart temporel de référence nul) est alors représentative de la valeur courante de l'écart temporel mutuel entre les deux signaux échantillonnés A+C et B+D. Ces opérations sont répétées lors de l'apparition des échantillons suivant des signaux A+C et B+D. On obtient donc, à la fréquence d'échantillonnage (c'est-à-dire toutes les 8,33 ns dans le cas présent), des valeurs successives de l'écart temporel mutuel TE entre les deux signaux échantillonnés A+C et B+D.

Dans le mode de réalisation illustré sur la figure 2, les moyens d'inter-corrélation MIC comportent deux entrées E1, E2 pour recevoir respectivement les deux signaux secondaires échantillonnés A+C et B+D.

Les moyens d'intercorrélation comportent ici cinq multiplieurs M1-M5 possédant chacun une première entrée e1 et une deuxième entrée e2.

Les moyens de retard comportent une chaîne de quatre éléments de retard ER1-ER4, définissant chacun une valeur de retard égale à l'écart temporel de base D'.

Les moyens de retard comportent également un élément de retard supplémentaire ERS définissant une valeur de retard 2D' égale au double de l'écart temporel de base.

En pratique, la valeur D' de l'écart temporel de base est égale à un nombre entier de période d'échantillonnage. Par exemple, pour une vitesse de rotation égale à 2x, et une bande fréquentielle occupée par les signaux échantillonnés égale à 9 MHz, on pourra choisir D' égal à l'inverse du double de la largeur de la bande de fréquences, soit 1/18 MHz, c'est-à-dire de l'ordre de 55 ns, ce qui correspond à un retard de base égal à 6 échantillons (pour une fréquence d'échantillonnage de 120 MHz).

Ainsi, dans ce cas, chaque élément de retard ERi pourra être constitué de 12 bascules en série cadencées par le signal d'échantillonnage, tandis que l'élément ERS pourra être constitué de 24 bascules en série cadencées par le signal d'horloge d'échantillonnage.

La première entrée el de chaque multiplieur est reliée à la première entrée E1 des moyens d'inter-corrélation par l'intermédiaire de l'élément de retard supplémentaire ERS.

L'une des extrémités (l'extrémité EX1) de la chaîne d'éléments de retard ER1-ER4, et la deuxième entrée e2 de l'un des multiplieurs (ici le multiplieur M1), sont directement connectées à la deuxième entrée e2 des moyens d'inter-corrélation.

La deuxième entrée e2 d'un autre multiplieur (ici le multiplieur M5) est connectée à l'autre extrémité EX2 de la chaîne d'éléments de retard. Par ailleurs, les deuxièmes entrées respectives e2 des trois autres multiplieurs M2, M3 et M4 sont respectivement connectées aux trois points intermédiaires EI2, EI3 et EI4 de la chaîne d'éléments de retard.

Les sorties respectives des cinq multiplieurs M1-M5 sont connectées à cinq filtres numériques passe-bas LPF1-LPF5, de structure connue en soi. Tous ces filtres passe-bas réalisent l'intégration présente dans la formule de la fonction d'inter-corrélation. Chaque filtre passe-bas est ici un filtre récursif du premier ordre. Le paramètre N définit la fréquence de coupure du filtre, c'est-à-dire le temps d'intégration du corrélateur. Dans le cas présent, la valeur 64 a été choisie pour N de façon à conférer une fréquence de coupure de 300 kHz. Les sorties des filtres passe-bas fournissent les cinq échantillons ECH1-ECH5 de la fonction d'inter-corrélation. Ces échantillons sont stockés dans un moyen de stockage RS composé par exemple de cinq bascules. Dans l'exemple décrit, chaque échantillon est un mot de 14 bits.

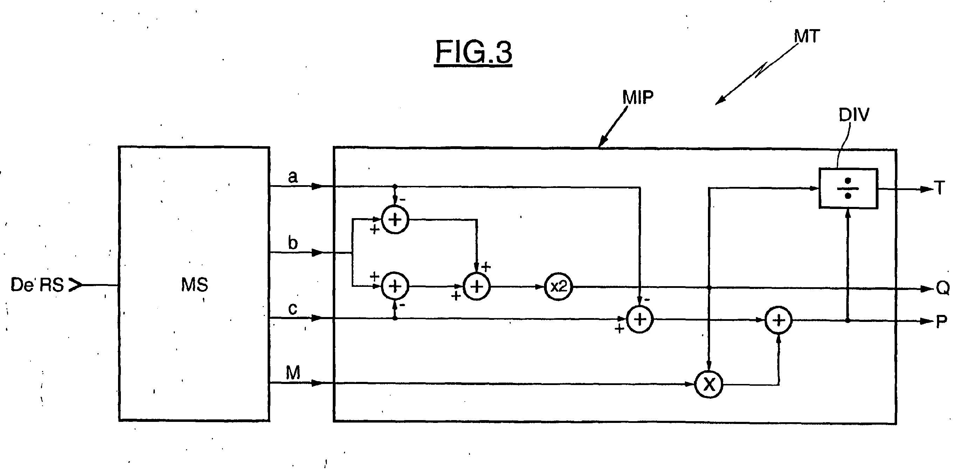

On fait maintenant référence plus particulièrement à la figure 3, pour décrire l'architecture des moyens de traitement MT. Ceux-ci comportent des moyens de sélection MS aptes à sélectionner, parmi les échantillons stockés dans les moyens de stockage RS, celui (référencé b sur la figure 2a) ayant la plus grande valeur et les deux échantillons l'encadrant (respectivement référencés a et c sur la figure 2a).

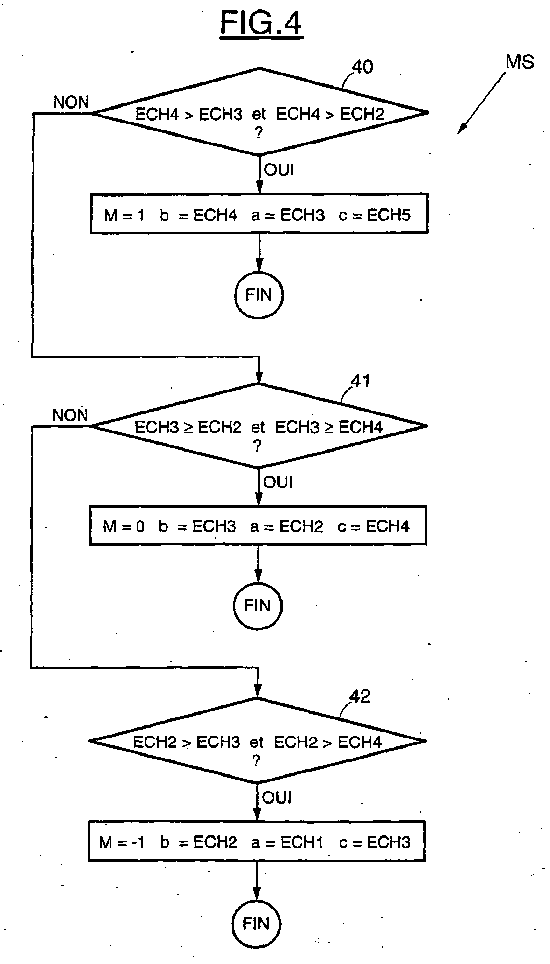

L'algorithme de sélection mis en oeuvre dans ces moyens, qui peuvent être par exemple réalisés de façon logicielle au sein d'un microprocesseur, est illustré sur la figure 4. Plus précisément, cet algorithme consiste à comparer mutuellement les échantillons ECH2, ECH3 et ECH4.

Plus précisément, si ECH4 est supérieur à ECH3 et si ECH4 est supérieur à ECH2 (étape 40), alors l'échantillon ayant la plus grande valeur (b) est l'échantillon ECH4 et les deux échantillons l'encadrant sont les échantillons ECH3 et ECH5.

Si, par contre, l'échantillon ECH3 est supérieur ou égal à l'échantillon ECH2 et également supérieur ou égal à l'échantillon ECH4 (étape 41), alors b est égal à ECH3, a est égal à ECH2 et c est égal à ECH4.

Enfin, si l'échantillon ECH2 est strictement supérieur à l'échantillon ECH3 et à l'échantillon ECH4 (étape 42), alors b est égal à ECH2, a est égal à ECH1 et c est égal à ECH3.

Les moyens d'interpolation parabolique MIP vont alors utiliser les valeurs a, b et c pour effectuer une interpolation parabolique entre ces trois échantillons, de façon à déterminer le maximum MAX de la fonction d'inter-corrélation et par conséquent l'écart temporel dT séparant ce maximum de l'échantillon b (figure 2a).

Cet écart temporel dT est défini par la formule (II).

$$dT = (c\text{-}a)/(2(2b\text{-}a\text{-}c)) \qquad\qquad (II)$$

Dans le cas où, comme illustré sur la figure 2, l'échantillon de la fonction d'inter-corrélation ayant la plus grande valeur, c'est-à-dire l'échantillon b, correspond à un écart temporel de référence nul, l'écart temporel mutuel T entre les deux signaux échantillonnés A+C et B+D est alors égal à dT.

Cependant, dans le cas où l'échantillon b correspond à l'écart temporel de référence égal à -D' ou à +D', il convient d'en tenir compte pour la détermination de l'écart temporel T. Il convient également de vérifier que la valeur D' a été choisie de telle sorte que, quel que soit l'écart temporel mutuel entre les signaux secondaires A+C et B+D, on ait toujours l'échantillon b correspondant, soit à l'écart temporel de référence -D', soit à +D', soit à 0.

Ainsi, d'une façon générale, l'écart temporel mutuel T est défini par la formule (III).

$$T = M + (c\text{-}a)/(2(2b\text{-}a\text{-}c)) \qquad\qquad (III)$$

Dans cette formule, M désigne un entier susceptible de prendre la valeur -1, 0 ou +1.

Cette valeur -1, 0 ou +1 est définie par les moyens de sélection MS. Ainsi, si l'on se réfère à nouveau à la figure 4, on voit que si l'échantillon b est l'échantillon ECH4, M prendra la valeur 1. Par contre, si l'échantillon b correspond à l'échantillon ECH3, M prendra la valeur 0, et si l'échantillon b correspond à l'échantillon ECH2, M prendra la valeur -1.

Il ressort de la formule (III) que l'écart temporel mutuel T entre les deux signaux secondaires A+C et B+D est égal au rapport P/Q, où P et Q sont définis respectivement par les formules (IV) et (V).

$$P = (c-a + 2M (2b-a-c)) \qquad (IV)$$

$$Q = 2(2b-a-c) \qquad (V)$$

La structure matérielle des moyens d'interpolation MIP peut être réalisée comme illustré sur la figure 3, à base d'additionneurs et de multiplieurs. Ces moyens MIP peuvent ainsi être réalisés de façon logicielle au sein d'un microprocesseur ou bien sous forme de circuit intégré.

Ainsi, toutes les 8,33 ns (ce qui correspond à la fréquence d'échantillonnage 120 mHz), les moyens MIP délivrent une valeur du signal P et une valeur du signal Q. Ces deux valeurs sont divisées dans un diviseur DIV, de façon à fournir l'écart temporel mutuel recherché T. Cette division est avantageusement effectuée pour des raisons de précision, en "binaire flottant".

L'erreur de positionnement TE est alors égale au produit de l'écart temporel T par la vitesse de rotation estimée. Cette vitesse de rotation estimée l'est par exemple à partir du comptage du nombre de passages à zéro du signal global A+B+C+D durant un certain nombre d'échantillons, typiquement 88 000 à 120 MHz. Cette estimation de la vitesse de rotation permet également de corriger la valeur de l'écart temporel de base D'.

Les échantillons successifs des numérateurs P et des dénominateurs Q vont former respectivement un premier signal d'entrée échantillonné P et un deuxième signal d'entrée échantillonné Q. Les moyens de post-traitement MPST vont alors élaborer à partir de ces deux signaux d'entrée échantillonnés un premier signal de sortie binaire TZC, représentatif du franchissement éventuel de la portion de piste par le signal incident et un deuxième signal de sortie binaire DIR représentatif du sens de franchissement de la portion de piste par le signal incident.

En effet, le signal P est égal à zéro à chaque fois que l'erreur de positionnement TE est nulle et peut donc être utilisé en tant que signal TZC. Le signal Q, qui dépend directement de la largeur de la bande de fréquences, est maximum lorsque le spot laser est sur la piste et minimum lorsque le spot laser se situe entre deux portions de piste. Il peut donc agir en tant que signal "miroir".

En d'autres termes, l'invention est ici remarquable en ce sens que les signaux P et Q sont toujours en quadrature, de telle sorte qu'ils possèdent les mêmes propriétés que les signaux TZC et "miroir" utilisés dans l'art antérieur. Cependant, dans le cas présent, les signaux échantillonnés P et Q sont issus du même bloc de traitement, à savoir les moyens d'interpolation MIP. Ils peuvent donc subir des traitements de filtrage identiques sans risque de perturbation de la mesure.

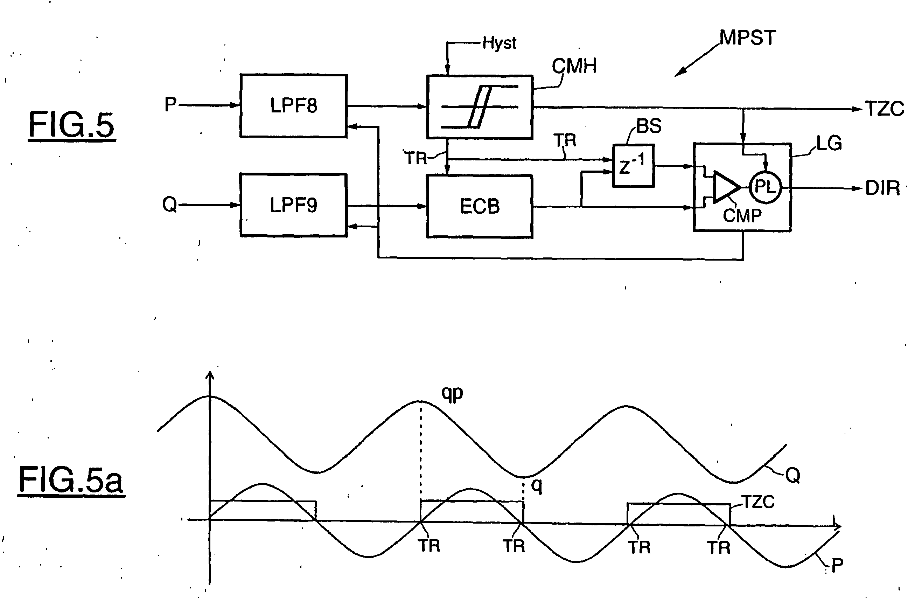

Comme illustré sur la figure 5a, le signal P va être utilisé pour définir le signal TZC. Plus précisément, la détection de chaque transition TR du signal P par rapport à un seuil prédéterminé, par exemple la valeur zéro, sera représentatif du franchissement éventuel d'une portion de piste par le signal incident. Ainsi, le signal TZC sera un signal échantillonné binaire prenant alternativement les valeurs +1 ou 0 à chaque franchissement du seuil par le signal P. Matériellement, le signal TZC est obtenu, comme illustré sur la figure 5, par comparaison du signal P dans un comparateur à hystérésis CMH de structure connue en soi, la valeur de l'hystérésis Hyst étant par exemple prise égale à 1/8 de l'amplitude du signal P.

Le deuxième signal de sortie binaire DIR est défini par la formule (VI) :

$$DIR = (Sign (q-qp)) \ XOR \ (TZC) \qquad (VI)$$

dans laquelle l'opérateur XOR désigne la fonction logique "OU exclusif".

Dans cette formule, q désigne l'amplitude du signal Q à chaque transition courante TR du signal P, tandis que qp désigne l'amplitude de ce signal Q à la transition précédente TR du signal P.

Ainsi, le signal DIR prendra soit la valeur 0, soit la valeur 1, en fonction du sens de franchissement de la portion de piste.

Matériellement, les moyens de post-traitement comportent une première entrée pour recevoir le premier signal d'entrée échantillonné P et une deuxième entrée pour recevoir le deuxième signal d'entrée échantillonné Q.

Les moyens de post-traitement MPST comportent également des moyens de détection de transition, à savoir le comparateur à hystérésis CMH, connecté à la première entrée, et apte à détecter chaque transition TR du signal d'entrée P et à délivrer le premier signal de sortie binaire TZC.

Ces moyens comportent également un échantillonneur-bloqueur ECB de structure connue en soi, connecté à la deuxième entrée et au moyen de détection de transition CMH. Cet échantillonneur est apte à stocker l'amplitude du deuxième signal d'entrée Q à chaque transition courante détectée TR du premier signal d'entrée P.

Les moyens MPST comportent également une bascule BS, commandée par les transitions TR du premier signal d'entrée P, et connectée à la sortie de l'échantillonneur-bloqueur ECB. Cette bascule est destinée à mémoriser l'amplitude du deuxième signal d'entrée Q à la transition précédente du premier signal d'entrée.

Enfin, un bloc logique LG élabore le deuxième signal de sortie binaire DIR. Ce bloc logique LG comporte un comparateur CMP dont les deux entrées sont respectivement reliées à la sortie de la bascule BS et à la sortie de l'échantillonneur-bloqueur ECB. Le bloc logique LG comporte également une porte logique OU exclusif référencée PL dont une entrée est reliée à la sortie du comparateur CMP et dont l'autre entrée reçoit le premier signal de sortie TZC. La sortie de la porte logique PL délivre le deuxième signal de sortie binaire DIR.

Outre les moyens qui viennent d'être décrits, il est particulièrement avantageux de prévoir également dans les moyens de post-traitement MPST, deux filtres passe-bas LPF8 et LPF9 du type à réponse impulsionnelle infinie destinés à filtrer les signaux P et Q avant leur traitement. La fréquence de coupure de ces deux filtres est avantageusement ajustée en fonction de la fréquence de franchissement des portions de pistes qui est un signal délivré par le bloc logique LG. Ainsi, on choisira avantageusement une fréquence de coupure de l'ordre de 100 kHz pour les filtres passe-bas lorsque la fréquence de franchissement des portions de pistes est inférieure à 50 kHz (début du mouvement du chariot). On choisira par contre une fréquence de coupure de l'ordre de 600 kHz pour les filtres passe-bas lorsque la fréquence de franchissement des portions de pistes est supérieure à 50 kHz.

Outre les avantages qui viennent d'être décrits, le système selon l'invention permet également de mieux maîtriser la détection des transitions lorsque l'on commence un déplacement du chariot et permet également de déterminer aisément les changements de sens de franchissement des portions de pistes. Il suffit en effet de mémoriser non seulement la valeur de l'amplitude du signal Q à la transition précédente, mais également celle à la transition précédent cette transition précédente. Si qpp désigne l'amplitude du signal Q deux transitions avant une transition courante, alors tout changement de sens de franchissement sera détecté à chaque fois que la valeur absolue de la différence (q-qp) sera inférieure à la valeur absolue de la différence (q-qpp).

## Revendications

**1.** Procédé de contrôle du positionnement d'un faisceau optique incident sur une piste d'un support, mobile en rotation, d'informations contenues dans ladite piste, dans lequel on capte le faisceau réfléchi par le disque au moyen d'un capteur optique comportant plusieurs photodétecteurs (PHD) délivrant respectivement plusieurs signaux élémentaires (A,B,C,D), et on détermine l'erreur de positionnement (TE) du faisceau par rapport à la piste à partir des signaux élémentaires, **caractérisé par le fait qu'**on élabore à partir des signaux élémentaires, deux signaux secondaires (A+C; B+D) échantillonnés dont l'écart temporel mutuel (T) est représentatif de l'erreur de positionnement (TE) du faisceau par rapport à la piste, et on déterminé, à la fréquence d'échantillonnage, les valeurs courantes successives dudit écart temporel mutuel (T) en recherchant, à la fréquence d'échantillonnage, les maxima courants successifs (MAX) de la fonction d'inter-corrélation entre les deux signaux secondaires échantillonnés, **caractérisé par le fait que** chaque maximum courant (MAX) de la fonction d'inter-corrélation est obtenu à partir d'un jeu d'échantillons (ECH1-ECH5) de cette fonction d'inter-corrélation correspondant respectivement à un jeu prédéterminé de valeurs d'écarts temporels de référence (-2D', ..., 2D'), la valeur de l'écart temporel (T) correspondant à ce maximum courant fournissant la valeur courante de l'écart temporel mutuel (T) entre les deux signaux secondaires échantillonnés.

**2.** Procédé selon la revendication 1, **caractérisé par le fait que** chaque écart temporel de préférence est un multiple entier d'un écart temporel de base (D'), l'un des écarts temporels de référence étant nul et les autres étant deux à deux égaux et de signe opposé, et **par le fait que** la valeur de l'écart temporel de base (D') dépend de la bande de fréquences occupée par les deux signaux secondaires échantillonnés.

**3.** Procédé selon la revendication 2, **caractérisé par le fait que** le nombre d'écarts temporels de référence est égal à cinq, et **par le fait que** la valeur de l'écart temporel de base (D') est inférieure à l'inverse de la largeur de la bande de fréquences.

**4.** Procédé selon l'une des revendications 1 à 3, **caractérisé par le fait que** la détermination de la valeur de l'écart temporel (T) correspondant à un maximum courant (MAX) comporte la sélection, parmi les échantillons de la fonction d'inter-corrélation, de celui ayant la plus grande valeur (b) et des deux échantillons (a, c) l'encadrant, une interpolation parabolique entre les trois valeurs sélectionnées et le calcul du rapport (P/Q) entre deux facteurs résultant de cette interpolation parabolique.

**5.** Procédé selon la revendication 4, **caractérisé par le fait qu'**on élabore à partir des numérateurs (P) des rapports successifs, un premier signal de sortie binaire (TZC) représentatif du franchissement éventuel de la portion de piste par le signal incident, et on élabore à partir des numérateurs (P) et des dénominateurs (Q) des rapports rapports successifs, un deuxième signal de sortie binaire (DIR) représentatif du sens de franchissement de la portion de piste par le signal incident.

**6.** Dispositif de contrôle du positionnement d'un faiceau optique incident sur une piste d'un support, mobile en rotation, d'informations contenues dans ladite piste, comprenant un capteur apte à capter le faisceau réfléchi par le disque et comportant plusieurs photodétecteurs (PHD), et des moyens de contrôle aptes à déterminer l'erreur de positionnement (TE) du faisceau par rapport à la piste à partir des signaux élémentaires respectivement délivrés par les photodétecteurs, moyens de contrôle comportant :

- des moyens de prétraitement (MPRT) aptes à élaborer à partir des signaux élémentaires, deux signaux secondaires (A+C; B+D) échantillonnés par un signal d'horloge d'échantillonnage, l'écart temporel mutuel (T) entre les deux signaux secondaires échantillonnés étant représentatif de l'erreur de positionnement (TE) du faisceau par rapport à la piste;
- des moyens d'inter-corrélation (MIC) aptes à effectuer, à la fréquence d'échantillonnage, la fonction d'inter-corrélation entre les deux signaux secondaires échantillonnés, ces moyens d'inter-corrélation comportant

. deux entrées (E1, E2) pour recevoir respectivement les deux signaux secondaires échantillonnés (A+C, B+D), un jeu de multiplieurs (M1-MS), connectés aux deux entrées par des moyens de retard (ERi, ERS), et délivrant respectivement un jeu de signaux intermédiaires échantillonnés correspondant respectivement aux produits des signaux secondaires échantillonés mutuellement décalés temporellement par des écarts temporels de référence;
. un jeu de fitres passe-bas (LPF1, LPF5) respectivement connectés aux sorties des différents multiplieurs; et **caractérisé par**
. un moyen de stockage (RS), connecté aux sorties des filtres passe-bas et apte à stocker les jeux successifs d'échantillons (ECH1-ECH5) de la fonction d'inter-corrélation respectivement associés aux différents écarts temporels de référence (-2D', ..., +2D'); et

- des moyens de traitement (MT) aptes à rechercher à la fréquence d'échantillonnage, chaque maximum courant (MAX) de la fonction d'inter-corrélation entre les deux signaux secondaires échantillonnés à partir de chaque jeu d'échantillons stockés dans le moyen de stockage, et à déterminer la valeur de l'écart temporel (T) correspondant à ce maximum courant, cette valeur ainsi déterminée fournissant la valeur courante de l'écart temporel mutuel (T) entre les deux signaux secondaires échantillonnés.

**7.** Dispositif selon la revendication 6, **caractérisé par le fait que** les moyens d'inter-corrélation (MIC) comportent cinq multiplieurs (M1-M5) possédant chacun une première entrée (e1) et une deuxième entrée (e2), **par le fait que** les moyens de retard comportent une chaîne de quatre élément de retard (ERi) définissant chacun une valeur de retard égale à un écart temporel de base (D'), et un élément de retard supplémentaire (ERS) définissant une valeur de retard (2D') égale au double de l'écart temporel de base, **par le fait que** la première entrée (e1) de chaque multiplieur est reliée à la première entrée (E1) des moyens d'inter-corrélation par l'intermédiaire de l'élément de retard supplémentaire (ERS), **par le fait que** l'une des extrémités (EX1) de la chaîne d'éléments de retard et la deuxième entrée (e2) de l'un des multiplieurs (M1) sont directement connectées à la deuxième entrée (E2) des moyens d'inter-corrélation, tandis que la deuxième entrée (e2) d'un autre multiplieur (M5) est connectée à l'autre extrémité (EX2) de la chaîne d'éléments de retard et que les deuxièmes entrées respectives (e2) des trois autres multiplieurs (M2-M4) sont respectivement connectés aux trois points intermédiaires (EI2-EI4) de la chaîne d'éléments de retard, et **par le fait que** l'écart temporel de base (D') est inférieur à l'inverse de la largeur de la bande de fréquences occupée par les deux signaux secondaires échantillonnés.

**8.** Dispositif selon la revendication 6 ou 7, **caractérisé par le fait que** les moyens de traitement comportent des moyens de sélection (MS) aptes à sélectionner, parmi les échantillons stockés dans les moyens de stockage (RS), celui (b) ayant la plus grande valeur et les deux échantillons (a, c) l'encadrant, et des moyens d'interpolation (MIP) aptes à effectuer une interpolation parabolique entre les trois valeurs sélectionnées et à calculer le rapport entre deux facteurs (P, Q) résultant de cette interpolation parabolique, ce rapport (P/Q) fournissant la valeur courante de l'écart temporel mutuel (T) entre les deux signaux secondaires échantillonnés.

**9.** Dispositif selon la revendication 8, **caractérisé par le fait qu'**il comprend des moyens de post-traitement (MPST) aptes à élaborer à partir des numérateurs (P) des rapports successifs, un premier signal de sortie binaire (P) représentatif du franchissement éventuel de la portion de piste par le signal incident, et à élaborer à partir des numérateurs et des dénominateurs des rapports successifs, un deuxième signal de sortie binaire (O) représentatif du sens de franchissement de la portion de piste par le signal incident.

**10.** Dispositif selon la revendication 9, **caractérisé par le fait que** les moyens de post-traitement (MPST) comportent :

- une première entrée pour recevoir un premier signal d'entrée échantillonné (P) formé par les numérateurs successifs et une deuxième entrée pour recevoir un deuxième signal d'entrée échantillonné (Q) formé par les dénominateurs successifs;
- des moyens de détection de transitions (CMH), connectés à la première entrée, aptes à détecter chaque transition (TR) du premier signal d'entrée (P) et à délivrer le premier signal de sortie binaire (TZC);
- un échantillonneur-bloqueur (ECB), connecté à la deuxième entrée et aux moyens de détection de transitions (CMH), apte à stocker l'amplitude (q) du deuxième signal d'entrée (Q) à chaque transition courante détectée (TR) du premier signal d'entrée (P);
- une bascule (BS), commandée par les transitions (TR) du premier signal d'entrée, et connectée à la sortie de l'échantillonneur-bloqueur et destinée à mémoriser l'amplitude (qp) du deuxième signal d'entrée à la transition précédente du premier signal d'entrée (P); et
- un bloc logique (LG) comportant un comparateur (CMP) dont les deux entrées sont respectivement reliées à la sortie de la bascule (BS) et à la sortie de l'échantillonneur-bloqueur (ECB), et dont la sortie est reliée à l'une des entrées d'une porte logique OU EXCLUSIF (PL) dont l'autre entrée reçoit ledit premier signal de sortie binaire (TZC), et dont la sortie délivre le deuxième signal de sortie binaire (DIR).

**11.** Lecteur de disque numérique multifonctions, **caractérisé par le fait qu'**il comporte un dispositif selon l'une des revendications 6 à 10.

## Claims

**1.** Method for controlling the positioning of an incident optical beam on a track of a medium, that is mobile in rotation, for information contained in the said track, in which the beam reflected by the disc is sensed by means of an optical sensor comprising several photodetectors (PHD) respectively delivering several individual signals (A, B, C, D) and the positioning error (TE) of the beam relative to the track is determined based on the individual signals, **characterized in that**, based on the individual signals, the user generates two sampled secondary signals (A+C; B+D), the mutual temporal difference (T) of which is representative of the positioning error (TE) of the beam relative to the track, and the user determines, at the sampling frequency, the successive current values of the said mutual temporal difference (T) by searching, at the sampling frequency, the successive current maxima (MAX) of the function of intercorrelation between the two sampled secondary signals, **characterized in that** each current maximum (MAX) of the function of intercorrelation is obtained from a set of samples (ECH1 - ECH5) of this intercorrelation function corresponding respectively to a predetermined set of reference temporal difference values (-2D', ..., 2D'), the value of the temporal difference (T) corresponding to this current maximum supplying the current value of the mutual temporal difference (T) between the two sampled secondary signals.

**2.** Method according to Claim 1, **characterized in that** each reference temporal difference is a whole multiple of a base temporal difference (D'), one of the reference temporal differences being zero and the others being equal by twos and having an opposite sign, and **in that** the value of the base temporal difference (D') depends on the frequency band occupied by the two sampled secondary signals.

**3.** Method according to Claim 2, **characterized in that** the number of reference temporal differences is equal to five, and **in that** the value of the base temporal difference (D') is less than the inverse of the width of the frequency band.

**4.** Method according to one of Claims 1 to 3, **characterized in that** the determination of the value of the temporal difference (T) corresponding to a current maximum (MAX) comprises the selection, from the samples of the intercorrelation function, of the sample having the largest value (b) and of the two samples (a, c) on either side of it, a parabolic interpolation between the three selected values and the calculation of the ratio (P/Q) between two factors resulting from this parabolic interpolation.

**5.** Method according to Claim 4, **characterized in that** the user generates from the numerators (P) of the successive ratios a first binary output signal (TZC) representative of the possible overshooting of the portion of track by the incident signal, and the user generates from the numerators (P) and the denominators (Q) of the successive ratios a second binary output signal (DIR) representative of the direction of overshoot of the portion of track by the incident signal.

**6.** Device for controlling the positioning of an incident optical beam on a track of a medium, mobile in rotation, for information contained in the said track, comprising a sensor capable of sensing the beam reflected by the disc and comprising several photodetectors (PHD), and control means capable of determining the positioning error (TE) of the beam relative to the track based on individual signals respectively delivered by the photodetectors, the control means comprising:

- preprocessing means (MPRT) capable of generating, from individual signals, two secondary signals (A + C; B + D) sampled by a sampling clock signal, the mutual temporal difference (T) between the two sampled secondary signals being representative of the positioning error (TE) of the beam relative to the track;
- intercorrelation means (MIC) capable of performing, at the sampling frequency, the function of intercorrelation between the two sampled secondary signals, these intercorrelation means comprising

. two inputs (E1, E2) for receiving respectively the two sampled secondary signals (A + C; B + D), a set of multipliers (M1 - M5), connected to the two inputs by retarding means (ERi, ERS) and delivering respectively a set of sampled intermediate signals corresponding respectively to the products of the sampled secondary signals mutually temporally offset by reference temporal differences;
. a set of low-pass filters (LPF1, LPF5) respectively connected to the outputs of the various multipliers; and
**characterized by**
. a storage means (RS), connected to the outputs of the low-pass filters and capable of storing the successive sets of samples (ECH1 - ECH5) of the intercorrelation function respectively associated with the various reference temporal differences (-2D', ..., +2D'); and

- processing means (MT) capable of finding, at the sampling frequency, each current maximum (MAX) of the function of intercorrelation between the two sampled secondary signals based on each set of samples stored in the storage means, and of determining the value of the temporal difference (T) corresponding to this current maximum, this value thus determined supplying the current value of the mutual temporal difference (T) between the two sampled secondary signals.

**7.** Device according to Claim 6, **characterized in that** the intercorrelation means (MIC) comprise five multipliers (M1 - M5) each having a first input (e1) and a second input (e2), **in that** the retarding means comprise a string of four retarding elements (ERi) each defining a retarding value equal to a base temporal difference (D'), and an additional retarding element (ERS) defining a retard value (2D') equal to twice the base temporal difference, **in that** the first input (e1) of each multiplier is connected to the first input (E1) of the intercorrelation means by means of the additional retarding element (ERS), **in that** one of the ends (EX1) of the string of retarding elements and the second input (e2) of one of the multipliers (M1) are directly connected to the second input (E2) of the intercorrelation means, while the second input (e2) of another multiplier (M5) is connected to the other end (EX2) of the string of retarding elements and that the second respective inputs (e2) of the other three multipliers (M2 - M4) are respectively connected to the three intermediate points (EI2 - EI4) of the string of retarding elements, and **in that** the base temporal difference (D') is less than the inverse of the width of the frequency band occupied by the two sampled secondary signals.

**8.** Device according to Claim 6 or 7, **characterized in that** the processing means comprise selection means (MS) capable of selecting, from the samples stored in the storage means (RS), the sample (b) having the greatest value and the two samples (a, c) on either side of it, and interpolation means (MIP) capable of carrying out a parabolic interpolation between the three selected values and of calculating the ratio between two factors (P, Q) resulting from this parabolic interpolation, this ratio (P/Q) supplying the current value of the mutual temporal difference (T) between the two sampled secondary signals.

**9.** Device according to Claim 8, **characterized in that** it comprises post-processing means (MPST) capable of generating, from the numerators (P) of the successive ratios, a first binary output signal (P) representative of the possible overshooting of the portion of track by the incident signal, and of generating from the numerators and the denominators of the successive ratios a second binary output signal (O) representative of the direction of overshoot of the portion of track by the incident signal.

10. Device according to Claim 9, **characterized in that** the post-processing means (MPST) comprise:

- a first input for receiving a first sampled input signal (P) formed by the successive numerators and a second input for receiving a second sampled input signal (Q) formed by the successive denominators;
- transition-detection means (CMH), connected to the first input, capable of detecting each transition (TR) of the first input signal (P) and of delivering the first binary output signal (TZC);
- a track and hold unit (ECB), connected to the second input and to the transition-detection means (CMH), capable of storing the amplitude (q) of the second input signal (Q) on each current transition (TR) detected of the first input signal (P);
- a flip-flop (BS) controlled by the transitions (TR) of the first input signal, and connected to the output of the track and hold unit and designed to store the amplitude (qp) of the second input signal on the previous transition of the first input signal (P); and
- a software block (LG) comprising a comparator (CMP) the two inputs of which are respectively connected to the output of the flip-flop (BS) and to the output of the track and hold unit (ECB), and the output of which is connected to one of the inputs of an EXCLUSIVE OR logic gate (PL) the other input of which receives the said first binary output signal (TZC), and the output of which delivers the secondary binary output signal (DIR).

11. Multifunction digital disc drive, **characterized in that** it comprises a device according to one of Claims 6 to 10.

**Patentansprüche**

1. Verfahren zur Steuerung der Positionierung eines einfallenden optischen Strahls auf einer Spur eines drehbeweglichen Trägers von in der Spur enthaltenen Daten, bei dem der von der Scheibe reflektierte Strahl mittels eines optischen Sensors aufgefangen wird, der mehrere Fotodetektoren (PHD) aufweist, die je mehrere Elementarsignale (A,B,C,D) liefern, und der Positionierfehler (TE) des Strahls bezüglich der Spur ausgehend von den Elementarsignalen bestimmt wird, **dadurch gekennzeichnet, dass** ausgehend von den Elementarsignalen zwei sekundäre Tastsignale (A+C; B+D) erarbeitet werden, deren gegenseitige zeitliche Abweichung (T) für den Positionierfehler (TE) des Strahls bezüglich der Spur repräsentativ ist, und auf der Tastfrequenz die laufenden aufeinanderfolgenden Werte der gegenseitigen zeitlichen Abweichung (T) bestimmt werden, indem auf der Tastfrequenz die laufenden aufeinanderfolgenden Maxima (MAX) der Interkorrelationsfunktion zwischen den zwei sekundären Tastsignalen gesucht werden, **dadurch gekennzeichnet, dass** jedes laufende Maximum (MAX) der Interkorrelationsfunktion ausgehend von einem Satz von Tastproben (ECH1-ECH5) dieser Interkorrelationsfunktion erhalten wird, die je einem vorbestimmten Satz von Werten zeitlicher Referenzabweichungen (-2D', ..., 2D') entsprechen, wobei der diesem laufenden Maximum entsprechende Wert der zeitlichen Abweichung (T) den laufenden Wert der gegenseitigen zeitlichen Abweichung (T) zwischen den zwei sekundären Tastsignalen liefert.

2. Verfahren nach Anspruch 1, **dadurch gekennzeichnet, dass** jede zeitliche Referenzabweichung ein ganzes Vielfaches einer zeitlichen Basisabweichung (D') ist, wobei eine der zeitlichen Referenzabweichungen Null und die anderen paarweise gleich und von entgegengesetztem Vorzeichen sind, und **dadurch**, dass der Wert der zeitlichen Basisabweichung (D') von dem von den zwei sekundären Tastsignalen besetzten Frequenzbereich abhängt.

3. Verfahren nach Anspruch 2, **dadurch gekennzeichnet, dass** die Anzahl von zeitlichen Referenzabweichungen gleich fünf ist, und dass der Wert der zeitlichen Basisabweichung (D') geringer als der Umkehrwert der Breite des Frequenzbereichs ist.

4. Verfahren nach einem der Ansprüche 1 bis 3, **dadurch gekennzeichnet, dass** die Bestimmung des Werts der zeitlichen Abweichung (T) entsprechend einem laufenden Maximum (MAX) die Auswahl, unter den Tastproben der Interkorrelationsfunktion, derjenigen mit dem größten Wert (b) und der zwei sie umrahmenden Tastproben (a, c), eine parabolische Interpolation zwischen den drei ausgewählten Werten und die Berechnung des Verhältnisses (P/Q) zwischen zwei Faktoren enthält, die aus dieser parabolischen Interpolation resultieren.

5. Verfahren nach Anspruch 4, **dadurch gekennzeichnet, dass** ausgehend von den Zählern (P) der aufeinanderfolgenden Verhältnisse ein erstes binäres Ausgangssignal (TZC) erarbeitet wird, das für das mögliche Überqueren des Spurabschnitts durch das einfallende Signal repräsentativ ist, und ausgehend von den Zählern (P) und den Nennern (Q) der aufeinanderfolgenden Verhältnisse ein zweites binäres Ausgangssignal (DIR) erarbeitet wird, das für die Überquerungsrichtung des Spurabschnitts durch das einfallende Signal repräsentativ ist.

6. Vorrichtung zur Steuerung der Positionierung eines einfallenden optischen Strahls auf einer Spur eines drehbeweglichen Trägers von in der Spur enthaltenen Daten, mit einem Sensor, der den von der Scheibe reflektierten Strahl auffangen kann und mehrere Fotodetektoren (PHD) aufweist, und mit Steuermitteln, die fähig sind, den Positionierfehler (TE) des Strahls bezüglich der Spur ausgehend von den Elementarsignalen zu bestimmen, die je von den Fotodetektoren geliefert werden, wobei die Steuermittel aufweisen:

- Vorverarbeitungsmittel (MPRT), die fähig sind, ausgehend von den Elementarsignalen zwei Sekundärsignale (A+C; B+D) zu erarbeiten, die von einem Abtast-Taktsignal abgetastet werden, wobei die gegenseitige zeitliche Abweichung (T) zwischen den zwei sekundären Tastsignalen für den Positionierfehler (TE) des Strahls bezüglich der Spur repräsentativ ist;
- Interkorrelationsmittel (MIC), die fähig sind, auf der Tastfrequenz die Interkorrelationsfunktion zwischen den zwei sekundären Tastsignalen durchzuführen, wobei diese Interkorrelationsmittel aufweisen

. zwei Eingänge (E1, E2), um die zwei sekundären Tastsignale (A+C, B+D) zu empfangen, einen Satz von Multiplikatoren (M1-M5), die über Verzögerungsmittel (ERi, ERS) mit den zwei Eingängen verbunden sind und je einen Satz von Zwischentastsignalen liefern, die je den Produkten der zueinander zeitlich versetzten sekundären Tastsignale mit zeitlichen Referenzabweichungen entsprechen;
. einen Satz von Tiefpassfiltern (LPF1, LPF5), die je mit den Ausgängen der verschiedenen Multiplikatoren verbunden sind; und **gekennzeichnet durch**
. ein Speichermittel (RS), das mit den Ausgängen der Tiefpassfilter verbunden und fähig ist, die aufeinanderfolgenden Sätze von Tastproben (ECH1-ECH5) der Interkorrelationsfunktion zu speichern, die je den verschiedenen zeitlichen Referenzabweichungen (-2D', ..., +2D') zugeordnet sind; und

- Verarbeitungsmittel (MT), die fähig sind, auf der Tastfrequenz jedes laufende Maximum (MAX) der Interkorrelationsfunktion zwischen den zwei sekundären Tastsignalen ausgehend von jedem Satz von Tastproben zu suchen, die im Speichermittel gespeichert sind, und den Wert der zeitlichen Abweichung (T) zu bestimmen, die diesem laufenden Maximum entspricht, wobei dieser so bestimmte Wert den laufenden Wert der gegenseitigen zeitlichen Abweichung (T) zwischen den zwei sekundären Tastsignalen liefert.

7. Vorrichtung nach Anspruch 6, **dadurch gekennzeichnet, dass** die Interkorrelationsmittel (MIC) fünf Multiplikatoren (M1-M5) aufweisen, die je einen ersten Eingang (e1) und einen zweiten Eingang (e2) besitzen, dass die Verzögerungsmittel eine Kette von vier Verzögerungselementen (ERi), die je einen Verzögerungswert gleich einer zeitlichen Basisabweichung (D') definieren, und ein zusätzliches Verzögerungselement (ERS) aufweisen, das einen Verzögerungswert (2D') gleich dem Doppelten der zeitlichen Basisabweichung definiert, dass der erste Eingang (e1) jedes Multiplikators mit dem ersten Eingang (E1) der Interkorrelationsmittel über das zusätzliche Verzögerungselement (ERS) verbunden ist, dass eines der Enden (EX1) der Kette von Verzögerungselementen und der zweite Eingang (e2) eines der Multiplikatoren (M1) direkt mit dem zweiten Eingang (E2) der Interkorrelationsmittel verbunden sind, während der zweite Eingang (e2) eines anderen Multiplikators (M5) mit dem anderen Ende (EX2) der Kette von Verzögerungselementen verbunden ist, und dass die zweiten Eingänge (e2) der drei anderen Multiplikatoren (M2-M4) mit den drei Zwischenpunkten (E12-E14) der Kette von Verzögerungselementen verbunden sind, und dass die zeitlich Basisabweichung (D') geringer als der Umkehrwert der Breite des Frequenzbereichs ist, der von den zwei sekundären Tastsignalen besetzt wird.

8. Vorrichtung nach Anspruch 6 oder 7, **dadurch gekennzeichnet, dass** die Verarbeitungsmittel Auswahlmittel (MS), die fähig sind, unter den in den Speichermitteln (RS) gespeicherten Tastproben diejenige (b) mit dem größten Wert und die zwei sie umrahmenden Tastproben (a, c) auszuwählen, und Interpolationsmittel (MIP) aufweisen, die fähig sind, eine parabolische Interpolation zwischen den drei ausgewählten Werten durchzuführen und das Verhältnis zwischen zwei Faktoren (P, Q) zu berechnen, die aus dieser parabolischen Interpolation resultieren, wobei dieses Verhältnis (P/Q) den laufenden Wert der gegenseitigen zeitlichen Abweichung (T) zwischen den zwei sekundären Tastsignalen liefert.

9. Vorrichtung nach Anspruch 8, **dadurch gekennzeichnet, dass** sie Nachverarbeitungsmittel (MPST) aufweist, die fähig sind, ausgehend von den Zählern (P) der aufeinanderfolgenden Verhältnisse ein erstes binäres Ausgangssignal (P) zu erarbeiten, das für die mögliche Überquerung des Spurabschnitts durch das einfallende Signal repräsentativ ist, und ausgehend von den Zählern und den Nennern der aufeinanderfolgenden Verhältnisse ein zweites binäres Ausgangssignal (O) zu erarbeiten, das für die Überquerungsrichtung des Spurabschnitts durch das einfallende Signal repräsentativ ist.

**10.** Vorrichtung nach Anspruch 9, **dadurch gekennzeichnet, dass** die Nachverarbeitungsmittel (MPST) aufweisen:

- einen ersten Eingang, um ein erstes Eingangstastsignal (P) zu empfangen, das von den aufeinanderfolgenden Zählern gebildet wird, und einen zweiten Eingang, um ein zweites Eingangstastsignal (Q) zu empfangen, das von den aufeinanderfolgenden Nennern gebildet wird;
- Mittel zur Erfassung von Übergängen (CMH), die mit dem ersten Eingang verbunden und fähig sind, jeden Übergang (TR) des ersten Eingangssignals (P) zu erfassen und das erste binäre Ausgangssignal (TZC) zu liefern;
- einen Abtast- und Haltekreis (ECB), der mit dem zweiten Eingang und mit den Mitteln zur Erfassung von Übergängen (CMH) verbunden und fähig ist, die Amplitude (q) des zweiten Eingangssignals (Q) bei jedem erfassten laufenden Übergang (TR) des ersten Eingangssignals (P) zu speichern;
- eine Kippstufe (BS), die von den Übergängen (TR) des ersten Eingangssignals gesteuert wird und mit dem Ausgang des Abtast- und Haltekreises verbunden und dazu bestimmt ist, die Amplitude (qp) des zweiten Eingangssignals beim vorhergehenden Übergang des ersten Eingangssignals (P) zu speichern; und
- einen Logikblock (LG), der einen Komparator (CMP) aufweist, dessen zwei Eingänge mit dem Ausgang der Kippstufe (BS) bzw. mit dem Ausgang des Abtast- und Haltekreises (ECB) verbunden sind, und dessen Ausgang mit einem der Eingänge eines logischen ODER-EXKLUSIV-Glieds (PL) verbunden ist, dessen anderer Eingang das erste binäre Ausgangssignal (TZC) empfängt, und dessen Ausgang das zweite binäre Ausgangssignal (DIR) liefert.

**11.** DVD-Player, **dadurch gekennzeichnet, dass** er eine Vorrichtung nach einem der Ansprüche 6 bis 10 enthält.

## FIG.1

FIG.2

FIG.2a

EP 1 128 371 B1

FIG.3

EP 1 128 371 B1

# FIG.4

MS

```
        NON          40
         ┌─────────◇ ECH4 > ECH3  et  ECH4 > ECH2 ◇
         │            ?
         │           │OUI
         │           ▼
         │  ┌──────────────────────────────────────┐
         │  │ M = 1  b = ECH4  a = ECH3  c = ECH5   │
         │  └──────────────────────────────────────┘
         │           │
         │           ▼
         │         (FIN)
         │
         ▼
        NON          41
         ┌─────────◇ ECH3 ≥ ECH2  et  ECH3 ≥ ECH4 ◇
         │            ?
         │           │OUI
         │           ▼
         │  ┌──────────────────────────────────────┐
         │  │ M = 0  b = ECH3  a = ECH2  c = ECH4   │
         │  └──────────────────────────────────────┘
         │           │
         │           ▼
         │         (FIN)
         │
         ▼
                     42
          ◇ ECH2 > ECH3  et  ECH2 > ECH4 ◇
                     ?
                    │OUI
                    ▼
           ┌──────────────────────────────────────┐
           │ M = -1  b = ECH2  a = ECH1  c = ECH3  │
           └──────────────────────────────────────┘
                    │
                    ▼
                  (FIN)
```

FIG.5

FIG.5a

EP 1 128 371 B1

**EP 1 128 371 B1**